**Europäisches Patentamt**

**European Patent Office**

**Office européen des brevets**

(19)

(11) Veröffentlichungsnummer : **0 470 622 B1**

(12)

# EUROPÄISCHE PATENTSCHRIFT

(45) Veröffentlichungstag der Patentschrift :
**13.10.93 Patentblatt 93/41**

(51) Int. Cl.$^5$ : **C04B 35/56, C04B 41/87**

(21) Anmeldenummer : **91113344.5**

(22) Anmeldetag : **08.08.91**

(54) **Verfahren zur Herstellung von Formkörpern aus siliciuminfiltriertem Siliciumcarbid.**

(30) Priorität : **09.08.90 DE 4025235**

(43) Veröffentlichungstag der Anmeldung :
**12.02.92 Patentblatt 92/07**

(45) Bekanntmachung des Hinweises auf die
Patenterteilung :
**13.10.93 Patentblatt 93/41**

(84) Benannte Vertragsstaaten :
**AT BE CH DE DK ES FR GB IT LI LU NL SE**

(56) Entgegenhaltungen :
**DE-A- 1 671 180**
**DE-A- 2 910 628**

(73) Patentinhaber : **Hoechst CeramTec
Aktiengesellschaft
Wilhelmstrasse 14
D-95100 Selb (DE)**

(72) Erfinder : **Benker, Werner
Ahornweg 28
W-8672 Selb (DE)**
Erfinder : **Schmidt, Jürgen
Oberdorfstrasse 30
W-8590 Marktredwitz (DE)**

(74) Vertreter : **Spiess, Bernhard et al
Hoechst AG Zentrale Patentabteilung,
Gebäude F 821
D-65926 Frankfurt (DE)**

**EP 0 470 622 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Silizieren von porösen, langgestreckten, zylinderförmigen Formkörpern aus Siliziumcarbid/Kohlenstoff unter Verwendung eines porösen Trägers aus siliziuminfiltriertem Siliziumcarbid, der eine Rinne zur Aufnahme des Formkörpers aufweist.

Bei der Infiltration von Siliziumcarbid-Formkörpern mit Silizium bilden sich oftmals Zonen mit besonders hohem Siliziumgehalt, sogenannte silizierte Bahnen, und daneben untersilizierte Bauteile. Beides führt zu Ausschuß.

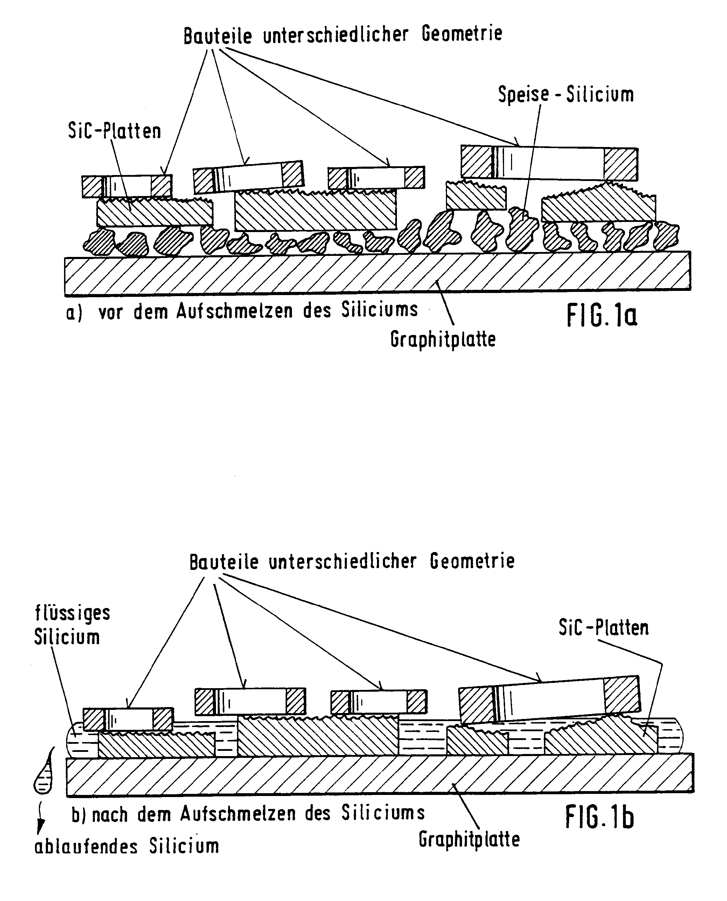

Nach dem Verfahren der EP-A-0 134 254 erfolgt die Infiltration des Siliziumcarbid/Kohlenstoff-Formkörpers über eine poröse Siliziumcarbidplatte, die mit einer Beschichtung aus Bornitrid, Siliziumcarbid und Kohlenstoff versehen ist. Unterhalb der Siliziumcarbidplatte und gegebenenfalls seitlich von ihr befindet sich (vor dem Aufheizen des Ofens) stückiges elementares Silizium. Es hat sich jedoch gezeigt, daß die Verwendung von plattenförmigen SiSiC-Infiltrationshilfsmitteln Nachteile aufweist. Wenn das Silizium, das sich zwischen den Brennplatten und den als Infiltrationshilfsmittel benutzten Siliziumcarbidplatten befindet, aufgeschmolzen ist, so sinken die Platten aufgrund der Schwerkraft durch das (spezifisch leichtere Silizium) und verdrängen dieses. Aufgrund der Oberflächenspannung können sich auf der Brennplatte Siliziumspiegel von bis zu 5 mm Höhe ausbilden. Wenn sich nach dem Durchsinken der als Infiltrationshilfsmittel benutzten Siliziumcarbidplatten ein höherer Spiegel ausbilden würde, so führte dies zum Ablauf des Siliziums von der Platte (Figur 1a und b). Da die Menge des Siliziums auf der Brennplatte so bemessen wird, daß sie gerade ausreicht, um die darauf befindlichen Bauteile vollständig zu infiltrieren und auch die Verdampfungsverluste auszugleichen, führt das Ablaufen von Silizium zu einer unvollständigen Infiltration von mindestens einigen Bauteilen. Ein vorsorgliches Überangebot an Silizium auf der Brennplatte verbietet sich, da sonst die Bauteile nach dem Abkühlen so fest mit dem Infiltrationshilfsmittel verbunden sind, daß ein Ablösen ohne Beschädigung nicht möglich ist. Wenn das Silizium von einer Brennplatte auf eine darunter liegende läuft, so tritt der Effekt des Verklebens dort auf.

Wie oben erwähnt, steigt durch das Einsinken der SiSiC-Platten in das schmelzflüssige Silizium der Siliziumpegel. Dies kann dazu führen, daß bei Verwendung zu niedriger Platten die Bauteile in direktem Kontakt mit dem geschmolzenen Silizium gelangen. Dies führt zu einer ungleichmäßigen Infiltration und dem Auftreten von Spannungen im Bauteil, was sich häufig durch Rißbildung äußert. Die entstandenen Risse füllen sich mit Silizium und sind im Bauteil als silizierte Bahnen sichtbar. Verhindert werden könnte dieser Effekt einerseits durch eine Reduzierung der Siliziummenge je Brennplatte oder durch eine Erhöhung der Dicke der Siliziumcarbid-Platten. Beide Möglichkeiten verringern jedoch die Wirtschaftlichkeit des Verfahrens.

Das beschriebene Verfahren unter Verwendung von SiSiC-Platten wird auch verwendet, um zylinderförmige Rohre und Stäbe zu silizieren.

Wegen der geringen Dicke der verwendeten porösen Trägerplatte und dem geringen Abstand zum flüssigen Silizium war es jedoch schwierig, eine gleichmäßige Silizierung zu erreichen. Dieses Problem läßt sich jedoch mindestens teilweise dadurch lösen, daß man die Trägerplatte, auf einem SiSiC-Behälter mit flüssigem Silizium anordnet (DE-A-37 19 606), so daß sie nicht mehr in direktem Kontakt mit dem flüssigen Silizium steht.

Darüberhinaus hat eine Trägerplatte noch den Nachteil, daß der zu silizierende rohrförmige Körper bei beendeter Silizierung mit seiner gesamten Länge an der Unterlage klebt.

Es bestand daher die Aufgabe, ein Verfahren anzugeben, bei dem nach dem Infiltrationsprozeß ein leichtes Ablösen der rohrförmigen Körper möglich ist, ohne daß sie durch Abplatzungen beschädigt werden. Die Erfindung beruht auf der Erkenntnis, daß die Kontaktflächen des zu silizierenden Rohrkörpers mit der Trägerplatte (= Infiltrationshilfsmittel) möglichst klein sein sollen.

Es wurde nun ein Verfahren zum Silizieren von porösen langgestreckten zylinderförmigen Formkörpern aus Siliziumcarbid/Kohlenstoff gefunden, bei dem man ein Gemisch aus Siliziumcarbid-Pulver, organischem Bindemittel und gegebenenfalls Kohlenstoff zu einem zylinderförmigen Grünkörper verformt, man das Bindemittel des Grünkörpers in einer nicht oxidierenden Atmosphäre durch Verkokung bei ca. 1000°C entfernt, den erhaltenen Rohling durch Einwirken von flüssigem elementarem Silizium bei Temperaturen von mindestens 1400°C siliziert, wobei der Rohling während des Silizierens auf einem porösen SiSiC-Träger aufliegt, der in Kontakt ist mit flüssigem Silizium, und die Anordnung aus SiSiC-Träger und erhaltenem zylinderförmigem SiSiC-Formkörper nach beendeter Silizierung abgekühlt wird, dadurch gekennzeichnet, daß der SiSiC-Träger eine gerade Rinne mit winkelförmigem Querschnitt und Ausnehmungen aufweist, in die der zu silizierende Rohling gelegt wird, und der SiSiC-Träger nach unten ragende Seitenwände besitzt, die an ihrer Unterseite mit dem flüssigen Silizium in Kontakt stehen. Der zylinderförmige Rohling kann stabförmig oder rohrförmig sein.

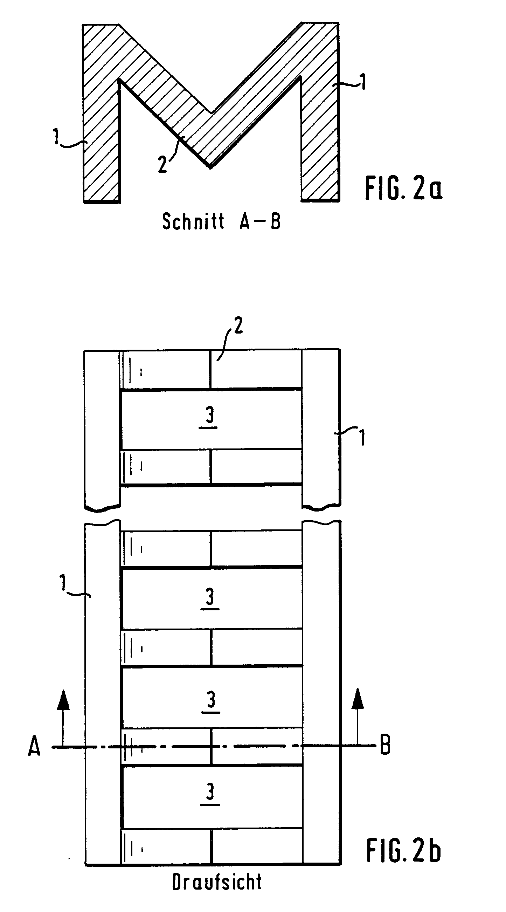

Ein erfindungsgemäß einsetzbarer SiSiC-Träger wird in Figur 2 dargestellt. Es handelt sich um ein Prisma mit M-förmigem Querschnitt. Die Schenkel 1 sollen an ihrer Unterseite in flüssiges Silizium eintauchen (nicht gezeichnet). Der Winkel 2 dient der Aufnahme der Rohlinge. Figur 2a zeigt den Schnitt A-B von Figur 2b. Figur 2b zeigt die Aufsicht auf den Träger mit den Durchbrüchen 3.

Die Menge des verwendeten Siliziums sollte in erster Näherung der Menge entsprechen, die eben beim Silizieren aufgenommen wird. Die Geschwindigkeit mit der das Silizium das M-förmige Prisma (= Infiltrationshilfsmittel) von unten nach oben durchwandert, läßt sich steuern durch die Größe und die Menge der mit Silizium gefüllten Poren. Je geringer die Dichte des Infiltrationshilfsmittels ist, umso größer ist der Flächenanteil des Siliziums und damit die wirksame Kapillarfläche. Je höher diese Fläche, umso höher auch die Wanderungsgeschwindigkeit. Der rechnerische Zusammenhang zwischen Dichte des Infiltrationshilfsmittel und dem Flächenanteil des Siliziums wird in der nachfolgenden Tabelle dargestellt.

| Dichte des Infiltrations-hilfsmittels $g/cm^3$ | Flächenanteil des Siliciums bzw. wirksame Kapillarfläche % |
|---|---|
| 2,50 | 80,7 |
| 2,60 | 69,3 |
| 2,70 | 58,0 |
| 2,80 | 46,6 |
| 2,90 | 35,2 |
| 3,00 | 23,9 |
| 3,10 | 12,5 |

Dieser Effekt wird (für die Silizierung eines Grünkörpers) bereits beschrieben in Special Ceramics 5, 1970 im Zusammenhang mit Figur 6.

Eine Verkleinerung des Porendurchmessers bremst den Siliziumfluß, eine Vergrößerung beschleunigt ihn. Die Größe der Porenradien hängt von den bei der Herstellung der Brennhilfsmittel eingesetzten Siliziumcarbid-Körnungen ab. Grobe Körnungen (z.B. F 230) ergeben große Poren, feine Körnungen (z.B. F 1200) ergeben kleine Poren. Durch eine geeignete Auswahl der Siliziumcarbidkörnungen kann somit erforderlichenfalls ein großer Bereich von Porenradienverteilungen eingestellt werden.

## Patentansprüche

1. Verfahren zum Silizieren von porösen langgestreckten zylinderförmigen Formkörpern aus Siliziumcarbid/Kohlenstoff, bei dem man ein Gemisch aus Siliziumcarbid-Pulver, organischem Bindemittel und gegebenenfalls Kohlenstoff zu einem zylinderförmigen Grünkörper verformt, man das Bindemittel des Grünkörpers in einer nicht oxidierenden Atmosphäre durch Verkokung bei ca. 1000°C entfernt, den erhaltenen Rohling durch Einwirken von flüssigem Silizium bei Temperaturen von mindestens 1400°C siliziert, wobei der Rohling während des Silizierens auf einem porösen SiSiC-Träger aufliegt, der in Kontakt steht mit flüssigem Silizium, und die Anordnung aus SiSiC-Träger und erhaltenem zylinderförmigem SiSiC-Formkörper nach beendeter Silizierung abgekühlt wird, dadurch gekennzeichnet, daß der SiSiC-Träger eine gerade Rinne mit winkelförmigem Querschnitt und Ausnehmungen aufweist, in die der zu silizierende zylinderförmige Rohling gelegt wird, und der SiSiC-Träger nach unten ragende Seitenwände besitzt, die an ihrer Unterseite mit dem flüssigen Silizium in Kontakt stehen.

2. Verfahren nach Anspruch 1, dadurch gekennzeichnet, daß der zu silizierende zylinderförmige Rohling ein Rohr ist.

## Claims

1. A process for silicizing a porous elongate cylindrical molding of silicon carbide/carbon, in which a mixture of silicon carbide powder, organic binder and, if appropriate, carbon is molded to give a cylindrical green compact, the binder of the green compact is removed by carbonization at about 1000°C in a non-oxidizing atmosphere and the resulting blank is silicized by the action of molten silicon at temperatures of at least 1400°C, the blank resting during silicizing on a porous SiSiC carrier which is in contact with molten silicon, and the assembly of SiSiC carrier and resulting cylindrical SiSiC molding being cooled after completion of the silicization, wherein the SiSiC carrier has a straight channel with an angular cross-section and recesses, into which the cylindrical blank to be silicized is placed, and the SiSiC carrier has downward-protruding side walls, whose undersides are in contact with the molten silicon.

2. The process as claimed in claim 1, wherein the cylindrical blank to be silicized is a tube.

**Revendications**

1. Procédé pour silicier des corps moulés cylindriques allongés et poreux, en carbure de silicium/carbone, selon lequel on met un mélange de poudre de carbure de silicium, de liant organique et éventuellement de carbone sous la forme d'un corps vert cylindrique, on élimine par cokéfaction à environ 1000°C le liant du corps vert en atmosphère non oxydante, on silicie à des températures d'au moins 1400°C l'ébauche obtenue en la soumettant à l'action de silicium liquide, l'ébauche reposant pendant la siliciation sur un support poreux en Si-SiC qui est en contact avec du silicium liquide et, après achèvement de siliciation, l'ensemble formé par le support en Si-SiC et le corps moulé cylindrique en Si-SiC obtenu est refroidi, procédé caractérisé en ce que le support en Si-SiC, présente un canal droit comportant une section de forme anguleuse et des évidements, canal dans lequel on place l'ébauche cylindrique à silicier, et le support en Si-SiC possède des parois latérales faisant saillie vers le bas et qui sont en contact, par leur côté inférieur, avec le silicium liquide.

2. Procédé selon la revendication 1, caractérisé en ce que l'ébauche cylindrique à silicier est un tube.

Bauteile unterschiedlicher Geometrie

Speise - Silicium

SiC-Platten

a) vor dem Aufschmelzen des Siliciums

Graphitplatte

FIG. 1a

Bauteile unterschiedlicher Geometrie

flüssiges
Silicium

SiC-Platten

b) nach dem Aufschmelzen des Siliciums

ablaufendes Silicium

Graphitplatte

FIG. 1b

FIG. 2a

Schnitt A—B

FIG. 2b

Draufsicht